(19) **Europäisches Patentamt**

**European Patent Office**

**Office européen des brevets**

(11) **EP 0 952 320 B1**

(12) **EUROPEAN PATENT SPECIFICATION**

(45) Date of publication and mention
of the grant of the patent:
**16.06.2004 Bulletin 2004/25**

(51) Int Cl.$^7$: **F02D 41/02**, F01N 3/08,
F01N 3/20

(21) Application number: **99107182.0**

(22) Date of filing: **13.04.1999**

(54) **An NOx emission control device and method**

Vorrichtung zur NOx-Emissionssteuerung und Verfahren

Dispositif de réglage d' émission NOx et méthode

(84) Designated Contracting States:
**DE FR GB**

(30) Priority: **14.04.1998 JP 10295098**

(43) Date of publication of application:
**27.10.1999 Bulletin 1999/43**

(73) Proprietor: **TOYOTA JIDOSHA KABUSHIKI
KAISHA
Aichi-ken 471-8571 (JP)**

(72) Inventors:
• **Kibe, Kazuya
Toyota-shi, Aichi-ken, 471-8571 (JP)**
• **Mizuno, Tatsuji
Toyota-shi, Aichi-ken, 471-8571 (JP)**

• **Gotoh, Masato
Toyota-shi, Aichi-ken, 471-8571 (JP)**

(74) Representative:
**Leson, Thomas Johannes Alois, Dipl.-Ing. et al
TBK-Patent,
P.O. Box 20 19 18
80019 München (DE)**

(56) References cited:
**EP-A- 0 503 882     EP-A- 0 602 963
EP-A- 0 779 095**

• **PATENT ABSTRACTS OF JAPAN vol. 1995, no.
01, 28 February 1995 (1995-02-28) & JP 06 285335
A (N E CHEMCAT CORP), 11 October 1994
(1994-10-11)**

## Description

### 1 Field of the Invention

The present invention relates to an $NO_x$ emission control device and an $NO_x$ emission control method for reducing a concentration of nitrogen oxide ($NO_x$) included in exhaust gas of an internal combustion engine.

### 2 Description of the Related Art

As a measure to reduce a concentration of nitrogen oxide ($NO_x$) included in exhaust gas of an internal combustion engine where combustion occurs under an oxygen-rich state, there is known a selective reduction type $NO_x$ catalyst, which selectively causes carbon hydride (HC) as a reducer to react to $NO_x$. For example, according to what is disclosed in Japanese Patent Application Laid-Open No. HEI 6-285335, HC is fed to a selective reduction type $NO_x$ catalyst such that the concentration of the HC becomes constant against a concentration of $NO_x$.

The selective reduction type $NO_x$ catalyst exhibits the capability to adsorb HC (hereinafter referred to as the HC adsorbing performance) on its surface (hereinafter referred to as the catalyst surface). By being adsorbed into the catalyst surface, HC increases its reactivity to $NO_x$ (hereinafter referred to as $NO_x$ reactivity). In order to reduce a concentration of $NO_x$, it is preferable that the catalyst surface adsorb as much HC as possible. However, there is a certain limit to the amount of HC which can be adsorbed by selective reduction type $NO_x$ catalysts. Thus, when a large amount of HC is been supplied to exhaust gas, the HC is discharged from the vehicle instead of being adsorbed to the catalyst surface. There is even a possibility of the occurrence of SOF (Soluble Organic Fraction) poisoning, where a surplus of HC that cannot be adsorbed to the catalyst surface is adhered thereto. Therefore, it is necessary to control the amount of HC to be supplied such that the amount of HC to be adsorbed to the selective reduction type $NO_x$ catalyst is maintained at an appropriate level. However, since the selective reduction type $NO_x$ catalyst changes its maximum HC adsorbing performance in accordance with a state of the catalyst or exhaust gas, it is difficult to control a feed rate of HC to be adsorbed to the catalyst surface.

### SUMMARY OF THE INVENTION

It is an object of the present invention to control an amount of HC to be supplied to a selective reduction type $NO_x$ catalyst in accordance with a parameter that changes HC adsorbing performance, i.e., reducer adsorbing performance, and to maintain a high $NO_x$ emission reduction rate regardless of reducer adsorbing performance.

In order to achieve the above-described object, according to one aspect of the present invention, there is provided an $NO_x$ emission control device constructed as follows. That is, the $NO_x$ emission control device reduces a concentration of $NO_x$ in exhaust gas discharged from an internal combustion engine, and includes an $NO_x$ catalyst and a controller. The $NO_x$ catalyst is able to adsorb a reducer and reduces a concentration of $NO_x$ under an oxygen-rich condition by means of the adsorbed reducer. The controller controls an amount of the reducer to be supplied to the $NO_x$ catalyst based on a parameter relating to the $NO_x$ catalyst. The controller reduces an amount of the reducer to be supplied, when the $NO_x$ catalyst reducer adsorbing performance is lower. The controller increases an amount of the reducer to be supplied, when the $NO_x$ catalyst reducer adsorbing performance is higher.

The reducer adsorbing performance of the $NO_x$ catalyst is estimated by detecting a parameter relating to the $NO_x$ catalyst, such as an amount of $NO_x$ included in exhaust gas, a flow rate of exhaust gas, a temperature of exhaust gas or the like. Thus, according to the aforementioned aspect of the present invention, the amount of the reducer to be supplied to the $NO_x$ catalyst is controlled in accordance with the reducer adsorbing performance of the $NO_x$ catalyst. Thus, it is possible to maintain a stable $NO_x$ emission reduction rate regardless of changes in reducer adsorbing performance of the $NO_x$ catalyst.

Furthermore, in the aforementioned aspect of the present invention, it is also advantageous to arrange the $NO_x$ catalyst in an exhaust passage through which exhaust gas is discharged to the atmosphere. This makes it possible to sufficiently reduce an amount of $NO_x$ to be discharged to the atmosphere.

### BRIEF DESCRIPTION OF THE DRAWINGS

The foregoing and further objects, features and advantages of the present invention will become apparent from the following description of preferred embodiments with reference to the accompanying drawings, wherein:

Fig. 1 shows an internal combustion engine to which a first embodiment of the present invention is applied;
Fig. 2 is a flowchart showing how to perform main injection control according to the first embodiment of the present invention;
Fig. 3 is a flowchart showing how to perform secondary injection control according to the first embodiment of the present invention;
Fig. 4 is a flowchart showing how to perform secondary injection amount control according to the first embodiment of the present invention;
Fig. 5 is a flowchart showing how to perform secondary injection amount control according to the first embodiment of the present invention;

Fig. 6 is a map of the base injection amount;

Fig. 7 is a map of the maximum HC adsorption amount;

Fig. 8 is a map of the adsorption ratio;

Fig. 9 is a map of the first correction factor;

Fig. 10 is a map of the second correction factor;

Fig. 11 is a map of the third correction factor;

Fig. 12 is a flowchart showing how to perform secondary injection amount control according to a second embodiment of the present invention;

Fig. 13 is a flowchart showing how to perform secondary injection amount control according to the second embodiment of the present invention; and

Fig. 14 is a flowchart showing how to perform secondary injection amount control according to the second embodiment of the present invention;

Fig. 15 is a map of the fuel commitment rate;

Fig. 16 is a map of the HC adsorption amount.

## DESCRIPTION OF THE PREFERRED EMBODIMENTS

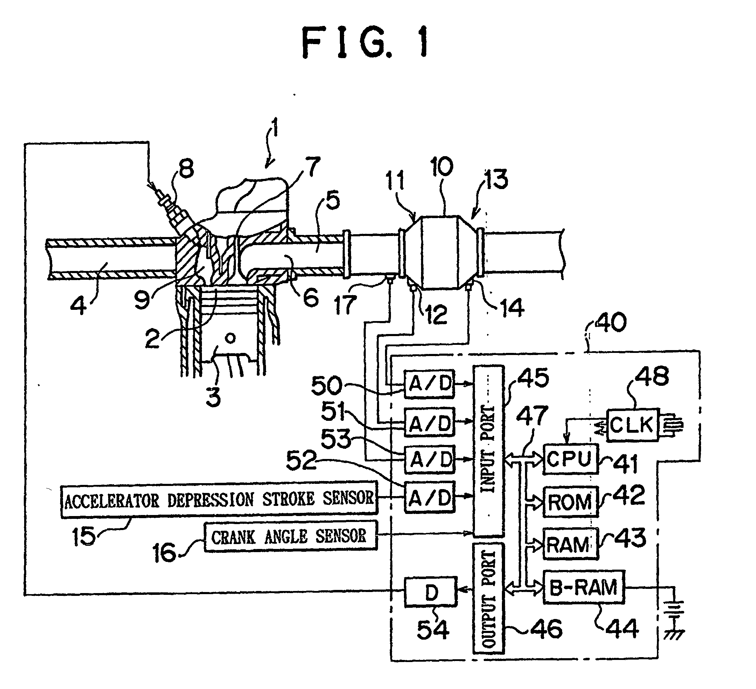

An internal combustion engine equipped with an $NO_x$ emission control device according to a first embodiment of the present invention will be described hereinafter with reference to the accompanying drawings. Referring to Fig. 1, a cylinder or combustion chamber 2 is formed inside an engine body 1. A piston 3 is inserted into the combustion chamber 2. An intake passage 4 for introducing air into the combustion chamber 2 is connected to the combustion chamber 2 through an intake port (not shown). An intake valve (not shown) for controlling introduction of intake air into the combustion chamber 2 is mounted to the intake port. An exhaust passage 5 for discharging exhaust gas from the combustion chamber 2 is connected to the combustion chamber 2 through an exhaust port 6. An exhaust valve 7 for discharging exhaust gas from the combustion chamber 2 is mounted to the exhaust port 6. In addition, a fuel injection valve 8 for supplying fuel to the combustion chamber 2 is mounted to the engine body 1. The fuel injection valve 8 supplies fuel to the combustion chamber 2 through an antechamber 9 formed in the engine body 1. The internal combustion engine of the present invention is a diesel engine, and oxygen-rich gas, which includes an excessive amount of oxygen for fuel supplied to the combustion chamber 2, is introduced into the combustion chamber 2. However, the present invention can be applied not only to a diesel engine but also to a gasoline engine where combustion occurs under oxygen-rich conditions.

An $NO_x$ catalytic converter 10 for controlling a concentration of $NO_x$ in exhaust gas is provided in the exhaust passage 5. The $NO_x$ catalyst 10 is composed of zeolite as a carrier and platinum carried on the surface of the zeolite. Even in exhaust gas containing an excessive amount of oxygen (oxidation atmosphere), the $NO_x$ catalyst 10 can reduce $NO_x$ by means of a reducer to control emission substances. In this embodiment, fuel supplied from the fuel injection valve 8, namely, carbon hydride (hereinafter referred to as HC) is used as a reducer. The $NO_x$ catalyst 10 is able to adsorb HC into its surface (the $NO_x$ catalyst 10 has HC adsorption performance). The HC adsorption performance changes according to a temperature of the catalyst. Concretely, the HC adsorption performance improves when the catalyst reaches a high temperature, and the HC adsorption performance deteriorates when the catalyst reaches a low temperature. In a specific temperature range, when the $NO_x$ catalyst 10 is at a temperature lower than a certain temperature (hereinafter referred to as an optimal temperature), the emission reduction rate of the $NO_x$ catalyst 10 becomes higher in proportion to a rise in temperature thereof. When the $NO_x$ catalyst 10 exceeds the optimal temperature, the emission reduction rate of the $NO_x$ catalyst 10 becomes lower in proportion to a rise in temperature thereof.

An upstream temperature sensor 12 is provided at an inlet end 11 that is located upstream of the $NO_x$ catalyst 10. The upstream temperature sensor 12 is designed to detect a temperature of the inlet end 11 of the $NO_x$ catalyst 10 (hereinafter referred to as an inlet temperature). On the other hand, a downstream temperature sensor 14 is provided at an outlet end 13 that is located downstream of the $NO_x$ catalyst 10. The downstream sensor 14 is designed to detect a temperature of the outlet end 13 of the $NO_x$ catalyst 10 (hereinafter referred to as an outlet temperature). It is to be noted herein that the HC adsorption performance corresponds to the reducer adsorbing performance. A pressure sensor 17 is provided upstream of the $NO_x$ catalyst 10 in the exhaust passage 5. The pressure sensor 17 is designed to detect a pressure in the exhaust passage 5.

The internal combustion engine is provided with an electronic control unit 40 for controlling operations of components of the internal combustion engine. The electronic control unit 40 is provided with a microprocessor (CPU) 41, a read-only memory (ROM) 42, a random access memory (RAM) 43, a back-up RAM (B-RAM) 44, an input port 45 and an output port 46. These components of the electronic control unit 40 are interconnected with one another through a bidirectional bus 47. The electronic control unit 40 is further provided with a clock circuit 48. The upstream temperature sensor 12 is connected to the input port 45 through a corresponding AD converter 51. On the other hand, the downstream temperature sensor 14 is connected to the input port 45 through a corresponding AD converter 50. The pressure sensor 17 is connected to the input port 45 through a corresponding AD converter 53.

Furthermore, the internal combustion engine of this embodiment is provided with an accelerator depression stroke sensor 15 for detecting a depression stroke of an accelerator of the vehicle. The accelerator depression stroke sensor 15 is connected to the input port 45 through a corresponding AD converter 52. The internal combustion engine is further provided with a crank angle sensor 16 for detecting an angular position (hereinafter referred to as a crank angle) of a crank shaft (not shown), which is mounted to the engine body 1. The crank angle sensor 16 is directly connected to the input port 45. This embodiment is designed to calculate an engine speed based on a crank angle, and to calculate an amount of air introduced into the combustion chamber 2 per one rotation of the engine 1 (hereinafter referred to as intake air amount) based on the calculated engine speed. The output port 46 is connected to the fuel injection valve 8 through a corresponding drive circuit 54.

It will be described hereinafter, according to the first embodiment of the - present invention, how to perform control for injecting fuel to be subjected to combustion in the combustion chamber from the fuel injection valve so as to drive the engine. Hereinafter, such fuel injection will be referred to as main injection. In this embodiment, main injection is carried out at a predetermined crank angle (hereinafter referred to as a main injection angle). The main injection angle is set to an angle in the latter period of a compression stroke of the engine or an angle in the former period of an expansion stroke of the engine. In this embodiment, the amount of fuel to be injected through main injection (hereinafter referred to as a main injection amount) is controlled in accordance with a depression stroke of the accelerator. To be more specific, if it is determined that the required engine output has increased in response to an increase in depression stroke of the accelerator, the main injection amount is increased. Further, according to this embodiment, the main injection amount is controlled by controlling an open period of the fuel injection valve 8. Needless to say, the main injection angle and the main injection amount may also be changed in accordance with other operating states of the internal combustion engine.

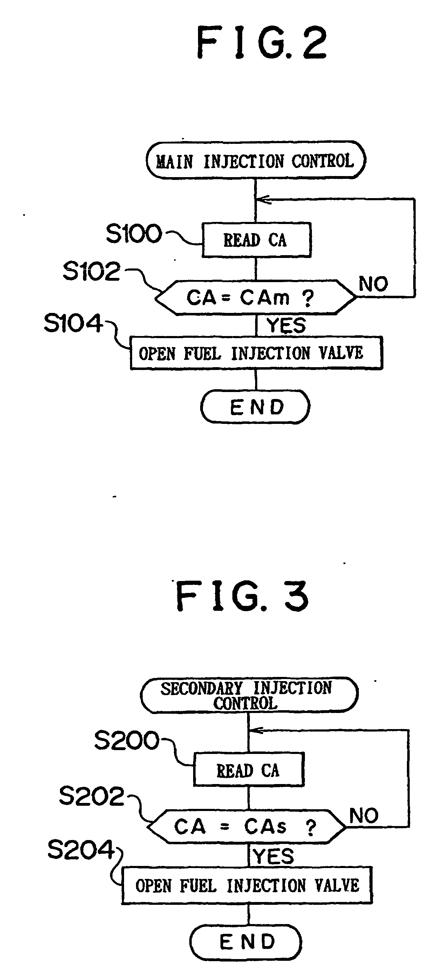

The implementation of the main injection control according to the first embodiment of the present invention will now be described with reference to Fig. 2. First of all, in step S100, a current crank angle CA is read from the crank angle sensor 16. In step S102, it is determined whether or not the crank angle CA is a predetermined angle CAm where main injection should be carried out (CA = CAm). If it has been determined in step S102 that CA = CAm, it is determined that main injection should be carried out. Then in step S104, the fuel injection valve 8 is kept open for a predetermined period, and a right amount of fuel is supplied to the combustion chamber 2. The operation is thus terminated. On the other hand, if it has been determined in step S102 that CACAm, it is determined that main injection should not be carried out, and the operation returns to step S100. After that, this routine is repeated until it is determined in step S102 that CACAm.

It will be described hereinafter, according to the first embodiment of the present invention, how to perform control for injecting fuel to be supplied to the $NO_x$ catalyst from the fuel injection valve so as to control $NO_x$ concentration in exhaust gas. Hereinafter, such fuel injection will be referred to as secondary injection. In this embodiment, secondary injection is carried out at a predetermined crank angle (hereinafter referred to as a secondary injection angle). The secondary injection angle is set to an angle in an expansion stroke or an exhaust stroke of the engine after implementation of main injection.

The $NO_x$ emission reduction rate of the $NO_x$ catalyst 10 becomes higher in proportion to a degree of heat decomposition of HC supplied to the $NO_x$ catalyst 10. The temperature in the combustion chamber 2 as well as the degree of heat decomposition of HC in the combustion chamber 2 becomes higher toward the beginning of an expansion stroke of the engine. Hence, in this embodiment, the secondary injection angle is controlled in accordance with an amount of heat-decomposed HC necessary for $NO_x$ emission control (hereinafter referred to as a required heat-decomposed HC amount). More specifically, the secondary injection angle is controlled such that the required heat-decomposed HC amount becomes larger toward the beginning of an expansion stroke of the engine. Needless to say, the secondary injection angle should be limited to a range where fuel supplied through secondary injection does not burn in the combustion chamber 2 completely.

The implementation of the secondary injection control according to the first embodiment of the present invention will now be described with reference to Fig. 3. First of all, in step S200, a current crank angle CA is read from the crank angle sensor 16. In step S202, it is determined whether or not the crank angle CA is a predetermined angle CAs where secondary injection should be carried out (CA = CAs). If it has been determined in step S202 that CA = CAs, it is determined that secondary injection should be carried out. Then in step S204, the fuel injection valve 8 is kept open for a predetermined period, and a right amount of fuel is supplied to the combustion chamber 2. The operation is thus terminated. On the other hand, if it has been determined in step S202 that CACAs, it is determined that secondary injection should not be carried out, and the operation returns to step S200. After that, this routine is repeated until it is determined in step S202 that CACAs.

It will be described hereinafter, according to the first embodiment of the present invention, how to control an amount of HC to be injected through secondary injection (hereinafter referred to as a secondary injection amount). In this embodiment, the secondary injection amount is controlled in accordance with a temperature of the catalyst, an amount of intake air, and HC adsorption performance. To be more specific, the amount of HC required to control $NO_x$ concentration in the $NO_x$ catalyst 10 (hereinafter referred to as a base injection amount) is calculated based on a temperature of the catalyst and an amount of intake air. The base injection amount thus calculated is corrected based on HC adsorption performance.

It will be described now in detail how to control the base injection amount for calculating a secondary injection amount. The reactivity of HC and $NO_x$ in the $NO_x$ catalyst 10 increases in proportion to a degree of heat decomposition of HC supplied to the $NO_x$ catalyst 10. HC becomes more susceptible to heat decomposition as the catalyst rises in temperature. Hence, according to this embodiment, the base injection amount is increased in proportion to a rise in temperature of the catalyst, so that the secondary injection amount is increased. The residence time of HC supplied through secondary injection in the $NO_x$ catalyst 10 becomes shorter in proportion to an increase in amount of intake air. Therefore, the reactivity of HC and $NO_x$ becomes lower. Hence, according to this embodiment, the base injection amount is reduced in proportion to an increase in amount of intake air, so that the secondary injection amount is reduced. Needless to say, the base injection amount may be changed in accordance with other parameters such as concentration of $NO_x$ in exhaust gas. Accordingly, the base injection amount corresponds to an amount of HC required to reduce $NO_x$ that has been discharged from the engine body 1.

It will be described now in detail how to correct a base injection amount for calculating a secondary injection amount. The HC supplied to the $NO_x$ catalyst 10 is adsorbed to a carrier surface of the $NO_x$ catalyst 10. The HC adsorbed to the carrier surface of the $NO_x$ catalyst 10 (hereinafter referred to as the adsorbed HC) is then decomposed into HC's with a lower boiling point. Due to such decomposition, the activity of the HC is enhanced. As described above, the maximum amount of HC to be absorbed into the $NO_x$ catalyst 10 (hereinafter referred to as the maximum HC adsorption amount) decreases in proportion to a rise in temperature of the catalyst and increases in proportion to a fall in temperature of the catalyst. Accordingly, when the maximum HC adsorption amount has decreased due to a rise in temperature of the catalyst, if the amount of adsorbed HC is larger than the maximum HC adsorption amount, the adsorbed HC is partially desorbed from the surface of the $NO_x$ catalyst 10. For this reason, even if a suitable amount of HC has been supplied to the $NO_x$ catalyst 10 through secondary injection, the amount of HC contributing to the emission control in the $NO_x$ catalyst 10 is more than appropriate. Hence, according to this embodiment, when the catalyst has reached a high temperature, the amount of HC to be injected through secondary injection is reduced in correspondence with an amount of HC desorbed from the surface of the $NO_x$ catalyst 10.

On the other hand, when the maximum HC adsorption amount has increased due to a fall in temperature of the catalyst, if the amount of adsorbed HC is smaller than the maximum HC adsorption amount, the HC supplied to the $NO_x$ catalyst 10 through secondary injection is partially adsorbed to the surface of the $NO_x$

catalyst 10. For this reason, even if a suitable amount of HC has been supplied to the $NO_x$ catalyst 10 through secondary injection, the amount of HC contributing to the emission control in the $NO_x$ catalyst 10 is less than appropriate. Hence, according to this embodiment, when the catalyst has reached a low temperature, the amount of HC to be injected through secondary injection is increased in correspondence with an amount of HC adsorbed to the carrier surface of the $NO_x$ catalyst 10.

The maximum HC adsorption amount increases in proportion to a rise in pressure of exhaust gas (hereinafter referred to as an exhaust pressure), and decreases in proportion to a fall in exhaust pressure. Accordingly, when the maximum HC adsorption amount has increased due to a rise in exhaust pressure, if the amount of adsorbed HC is smaller than the maximum HC adsorption amount, the HC supplied to the $NO_x$ catalyst 10 through secondary injection is partially adsorbed to the surface of the $NO_x$ catalyst 10. For this reason, even if a suitable amount of HC has been supplied to the $NO_x$ catalyst 10 through secondary injection, the amount of HC contributing to the emission control in the $NO_x$ catalyst 10 is less than appropriate. Hence, according to this embodiment, when the exhaust pressure has become high, the amount of HC to be injected through secondary injection is increased in correspondence with an amount of HC adsorbed to the surface of the $NO_x$ catalyst 10.

On the other hand, when the maximum HC adsorption amount has decreased due to a fall in exhaust pressure, if the amount of adsorbed HC is larger than the maximum HC adsorption amount, the adsorbed HC is partially desorbed from the surface of the $NO_x$ catalyst 10. For this reason, even if a suitable amount of HC has been supplied to the $NO_x$ catalyst 10 through secondary injection, the amount of HC contributing to the emission control in the $NO_x$ catalyst 10 is more than appropriate. Hence, according to this embodiment, when the exhaust pressure has become low, the amount of HC to be injected through secondary injection is reduced in correspondence with an amount of HC desorbed from the surface of the $NO_x$ catalyst 10.

Thus, according to the first embodiment, a suitable amount of HC to be consumed for emission control is constantly present in (adsorbed to) the $NO_x$ catalyst 10. Accordingly, a high $NO_x$ emission reduction rate can be maintained regardless of changes in the maximum HC adsorption amount in the $NO_x$ catalyst. Further, since an exact amount of HC to be consumed for emission control is supplied to the $NO_x$ catalyst, it is possible to economize on HC.

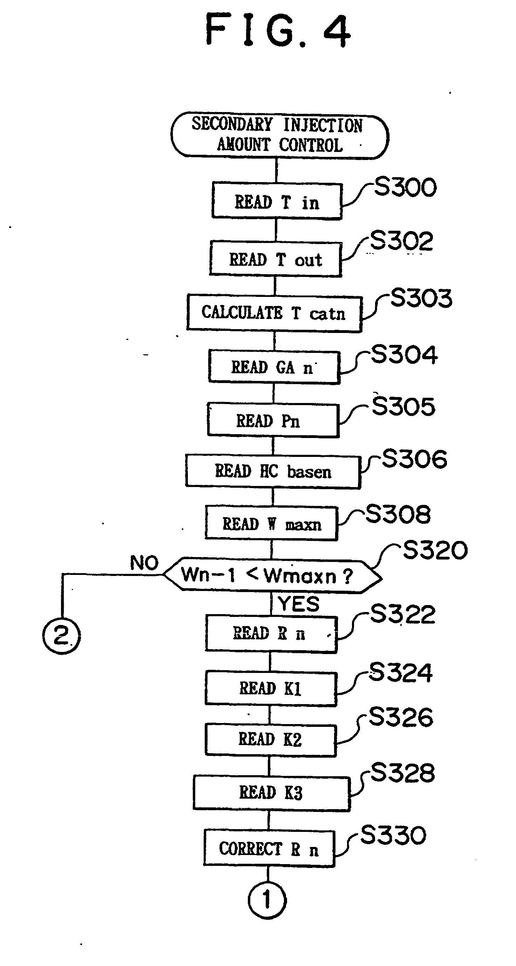

It will be described now in detail with reference to a flowchart in Fig. 4, how to control the secondary injection amount according to the first embodiment of the present invention. Referring to Fig. 4, first of all in step S300, an inlet catalyst temperature Tin is read from the upstream temperature sensor 12 provided upstream of the $NO_x$ catalyst 10. Then in step S302, an outlet catalyst temperature Tout is read from the downstream temperature sensor 14 provided downstream of the $NO_x$ catalyst 10. Then in step S303, a catalyst temperature Tcatn during implementation of the present routine is calculated based on a formula (1). Then in step S304, an intake air amount GAn during implementation of the present routine is calculated. As described above, the intake air amount GAn is calculated based on an engine speed.

$$Tcatn = (Tin + Tout) / 2 \qquad (1)$$

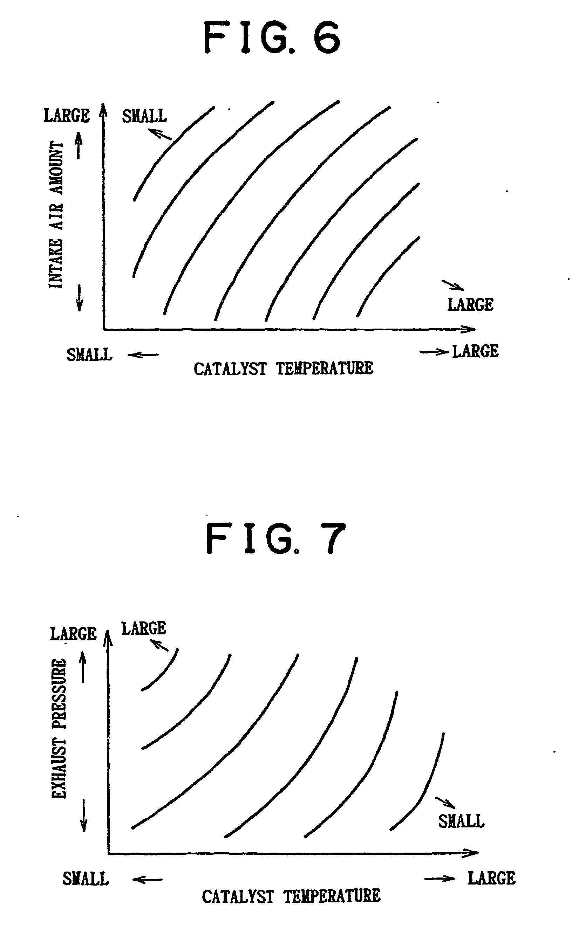

Then in step S305, an exhaust pressure Pn during the present routine is read from the pressure sensor 17. After that, in step S306, a base injection amount HCbasen corresponding to the catalyst temperature Tcatn and the intake air amount GAn is read from a map shown in Fig. 6. Then in step S308, a maximum HC adsorption amount Wmaxn corresponding to the catalyst temperature Tcatn and the exhaust pressure Pn is read from a map shown in Fig. 7.

Then in step S320, it is determined whether or not the amount Wn-1 of HC adsorbed to the carrier surface of the $NO_x$ catalyst 10 during implementation of the foregoing routine (hereinafter referred to as the HC adsorption amount) is smaller than the maximum HC adsorption amount Wmaxn during implementation of the present routine (Wn-1 < Wmaxn). If it has been determined in step S320 that Wn-1 < Wmaxn, it is determined that more HC can be adsorbed to the surface of the NOx catalyst 10. The operation then proceeds to step S322. On the other hand, if it has been determined in step S320 that Wn-1 > Wmaxn, it is determined that HC is desorbed from the surface of the $NO_x$ catalyst 10. The operation then proceeds to step S340.

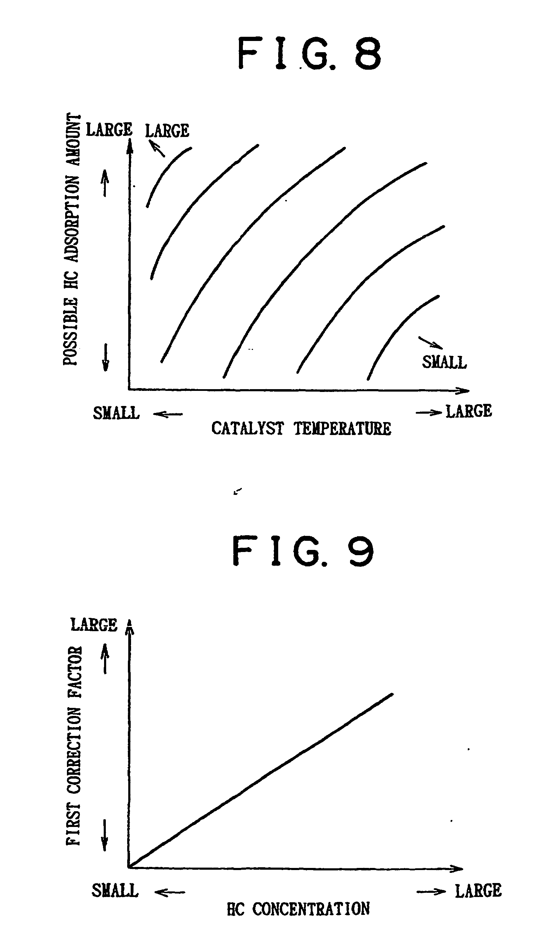

In step S322, an adsorption ratio Rn during implementation of the present routine, which adsorption ratio Rn corresponds to the temperature Tcatn of the $NO_x$ catalyst 10 and the amount of HC (Wmaxn - Wn-1) to be further adsorbed to the $NO_x$ catalyst 10, is read from a map shown in Fig. 8. The operation then proceeds to step S324. The adsorption ratio Rn represents the ratio of an amount of HC adsorbed to the surface of the $NO_x$ catalyst 10 to an amount of HC supplied to the $NO_x$ catalyst 10. The adsorption ratio Rn is determined according to an amount of HC to be further adsorbed during implementation of the present routine and a temperature of the catalyst. More specifically, as can be seen from Fig. 8, the adsorption ratio increases in proportion to an increase in amount of HC to be further adsorbed, and decreases in proportion to a rise in temperature of the catalyst.

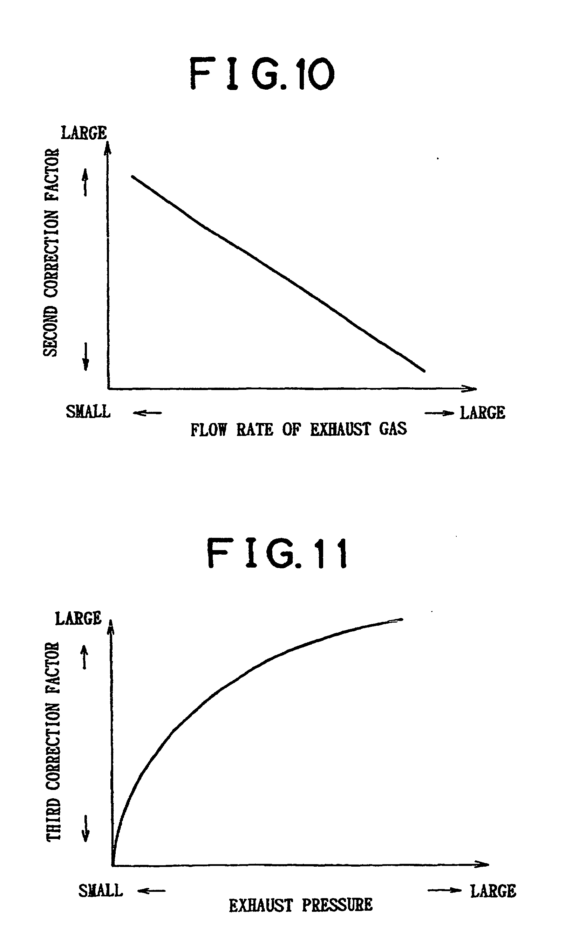

The adsorption ratio Rn changes in accordance with a concentration of HC in exhaust gas flowing into the $NO_x$ catalyst 10, a flow rate of exhaust gas and an exhaust pressure. To be more specific, the adsorption ratio Rn increases in proportion to an increase in HC concentration, decreases in proportion to an increase in flow rate of exhaust gas, and increases in proportion to an increase in exhaust pressure. Thus in step S324, a first correction factor K1 for correcting the adsorption ratio Rn in accordance with a concentration of HC in exhaust gas is read from a map shown in Fig. 9. Then in step S326, a second correction factor K2 for correcting the adsorption ratio Rn in accordance with a flow rate of exhaust gas is read from a map shown in Fig. 10. Then in step S328, a third correction factor K3 for correcting the adsorption ratio Rn in accordance with an exhaust pressure is read from a map shown in Fig. 11. The operation then proceeds to step S330.

In step S330, an adsorption ratio Rn is calculated according to a formula (2). After that, in step S332, an increase-side correction injection amount HCan during implementation of the present routine is calculated based on a formula (3). It is to be noted herein that the increase-side correction injection amount HCan assumes a positive value. Then in step S334, a secondary injection amount HCn during implementation of the present routine is calculated according to a formula (4). The operation then proceeds to step S336.

$$Rn = Rn \, K1 \, K2 \, K3 \qquad (2)$$

$$HCan = HCbasen \, Rn / (1 - Rn) \qquad (3)$$

$$HCn = HCbasen \, HCan \qquad (4)$$

In step S336, it is determined whether or not the secondary injection amount HCn calculated during implementation of the present routine is smaller than an amount of HC (hereinafter referred to as a possible HC supply amount) that does not allow HC to pass straight through the $NO_x$ catalyst 10 even if HC has been supplied in the amount of HCn (HCn < HCmaxn). If it has been determined in step S336 that HCn < HCmaxn, it is determined that even if HC has been supplied to the $NO_x$ catalyst 10 in the secondary injection amount HCn calculated in step S334, the HC is completely consumed in an adsorptive or emission control reaction in the $NO_x$ catalyst 10. Then in step S338, an HC adsorption amount Wn is calculated based on a formula (5), and the operation is then terminated. On the other hand, if it has been determined in step S336 that HCn HCmaxn, it is determined that if HC has been supplied to the $NO_x$ catalyst 10 in the secondary injection amount HCn calculated in step S334, some of the HC is not consumed in an adsorptive or emission control reaction in the $NO_x$ catalyst 10. Then in step S350, the secondary injection amount HCn is set to the maximum possible supply amount HCmaxn. Thus, the secondary injection amount is limited to the maximum possible supply amount. Then in step S338, an HC adsorption amount Wn is calculated according to the formula (5). The operation is then terminated. Hence, without allowing HC to flow downstream of the $NO_x$ catalyst 10, the base injection amount is adjusted such that the concentration of $NO_x$ in exhaust gas can best be controlled.

$$Wn = Wn-1 + HCn \ Rn \qquad (5)$$

In step S340, a decrease-side correction injection amount HCdn is calculated based on a formula (6). Then in step S342, a secondary injection amount HCn is calculated based on a formula (7). The operation then proceeds to step S344.

$$HCdn = Wn-1 - Wmaxn \qquad (6)$$

$$HCn = HCbasen - HCdn \qquad (7)$$

It is determined in step S344 whether or not the secondary injection amount calculated in step S342 is smaller than 0 (HCn < 0). If it has been determined in step S344 that HCn < 0, the secondary injection amount HCn is set to 0 in step S346. Then in step S348, the HC adsorption amount Wn is set to a maximum HC adsorption amount Wmaxn during implementation of the present routine. The operation is then terminated. On the other hand, if it has been determined in step S344 that HCn 0, the HC adsorption amount Wn is set to a maximum HC adsorption amount Wmaxn in step S348. The operation is then terminated. Hence, the base injection amount is adjusted such that the concentration of $NO_x$ in exhaust gas can best be controlled.

In this embodiment, the fuel injection valve for carrying out main injection is employed as an HC supply valve for supplying HC to the $NO_x$ catalyst. However, in addition to the aforementioned fuel injection valve, an HC supply valve for supplying HC may be provided separately in the exhaust gas passage between the engine body and the $NO_x$ catalyst. Further, HC as a reducer may be supplied to the $NO_x$ catalyst in an amount larger than what is necessary for combustion in the cylinder. The present invention can be applied to any catalyst that is able to adsorb HC.

The maximum HC adsorption amount changes in accordance with a degree of deterioration of the catalyst. However, according to the first embodiment of the present invention, since the maximum HC adsorption amount is determined in accordance with a catalyst temperature and an exhaust pressure, it is difficult to maintain a high emission reduction rate when the catalyst has deteriorated.

In order to maintain a high $NO_x$ emission reduction rate regardless of a degree of deterioration of the catalyst, according to a second embodiment of the present invention, the maximum HC adsorption amount is corrected in accordance with a degree of deterioration of the catalyst. To be more specific, the maximum HC adsorption amount is corrected so as to decrease in proportion to an increase in degree of deterioration of the catalyst.

First of all, it will be described in detail how to correct a maximum HC adsorption amount. As described above, the maximum HC adsorption amount changes in accordance with a catalyst temperature and an exhaust pressure. Hence, a maximum HC adsorption amount in an unused catalyst is first calculated based on a catalyst temperature and an exhaust pressure.

The degree of deterioration of the catalyst changes in accordance with an amount of fuel that has been supplied to and adhered to the catalyst, particularly in accordance with an amount of sulphur oxide. Hence, an amount of fuel that has been supplied to the catalyst is first calculated. Out of the fuel that has been supplied to the catalyst, the amount of fuel relating to actual deterioration of the catalyst changes in accordance with a catalyst temperature. Hence, an amount of fuel relating to actual deterioration of the catalyst is calculated based on a temperature of the catalyst. Then, a drop in maximum HC adsorption amount is calculated based on the calculated amount of fuel relating to deterioration of the catalyst. Finally, the aforementioned drop in maximum HC adsorption amount is subtracted from the maximum HC adsorption amount, whereby a maximum HC adsorption amount is obtained.

In this embodiment, since the maximum HC adsorption amount is corrected based on a degree of deterioration of the catalyst, it is possible to maintain a high emission reduction rate regardless of a degree of deterioration of the catalyst. This embodiment is identical to the first embodiment as to the construction of the internal combustion engine and control operations other than the above-described one, which will therefore not be described.

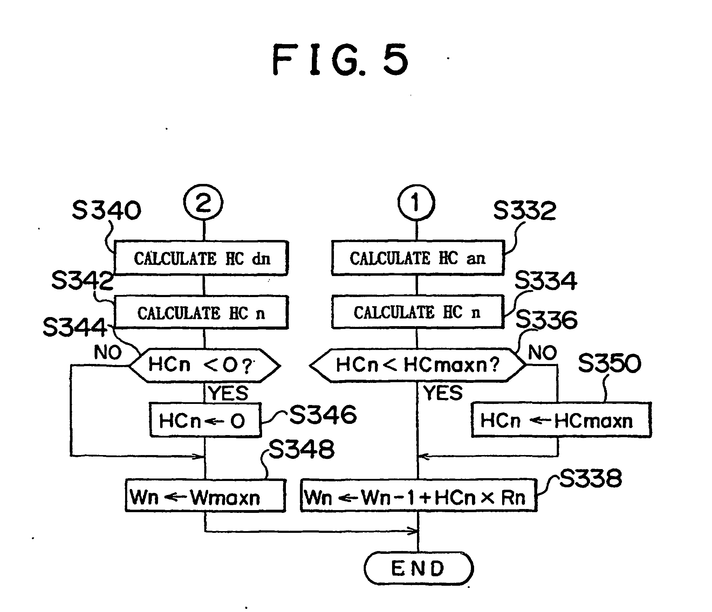

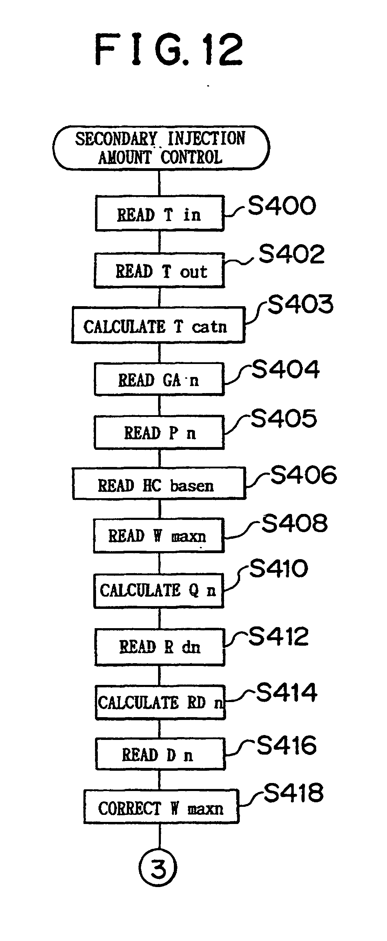

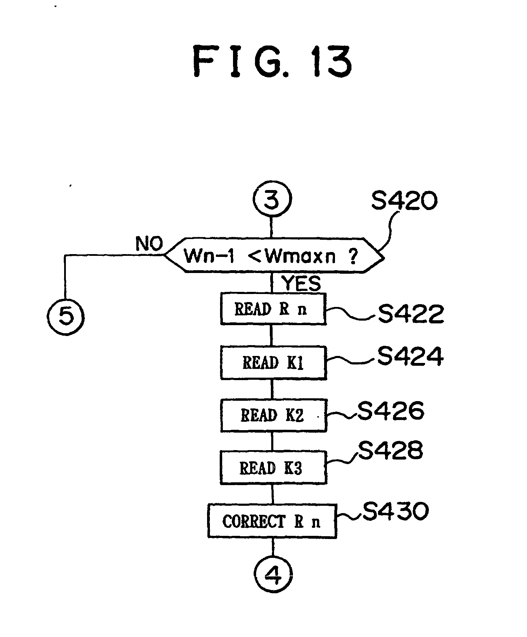

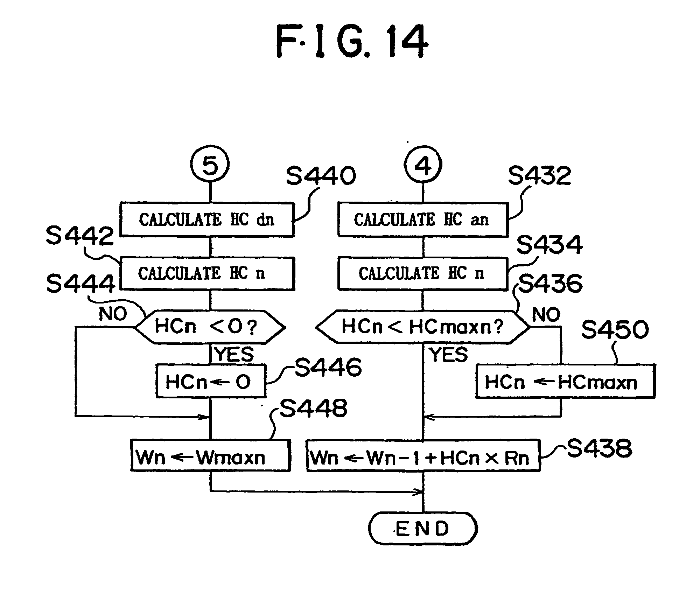

The secondary injection amount control according to the second embodiment of the present invention will now be described in detail with reference to flowcharts in Figs. 12 through 14. It is to be noted herein that steps S400 through S408 in Fig. 12 correspond to steps S300 through S308 in Fig. 4, and that steps S420 through S450 in Figs. 13 and 14 correspond to steps S320 through S350 in Figs. 4 and 5. Therefore, the description of these steps will be omitted.

In this embodiment, in step S408, the maximum HC adsorption amount corresponding to a catalyst temperature Tcatn and an exhaust pressure Pn is read from the map. After that, in step S410, a fuel supply amount Qn is calculated according to a formula (8). It is to be noted herein that Qin represents a total amount of fuel that is injected from the fuel injection valve during one engine stroke, and that NE represents an engine speed.

$$Qn = Qin \; NE \qquad (8)$$

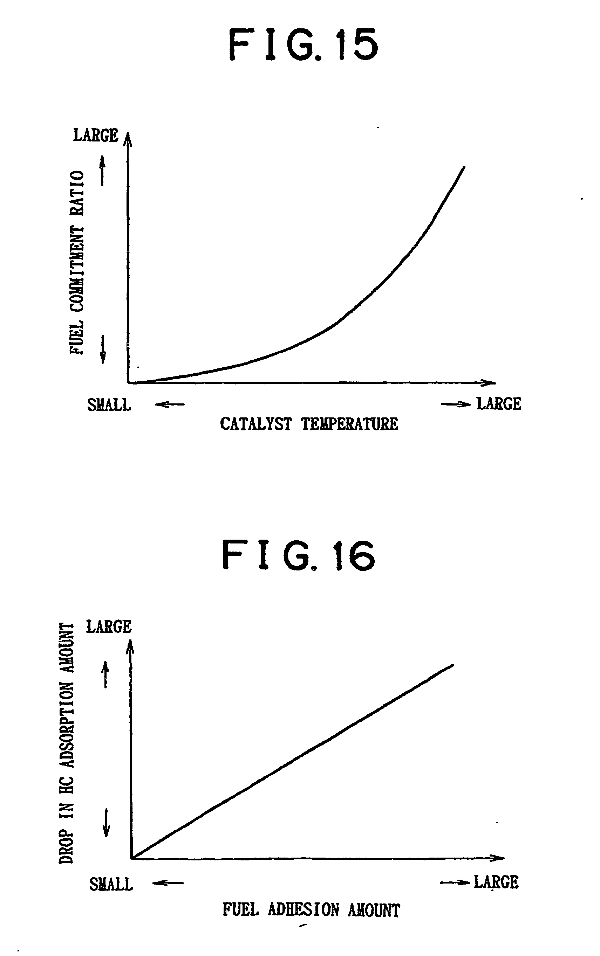

Then in step S412, a fuel commitment rate Rdn in this routine is read from a map shown in Fig. 15. The fuel commitment rate Rdn represents a ratio of the amount of fuel actually relating to deterioration of the $NO_x$ catalyst 10 to the amount of fuel injected from the fuel injection valve. As can be seen from Fig. 15, the fuel commitment rate Rdn becomes high in proportion to a rise in temperature of the catalyst.

Then in step S414, a total amount Rdn of fuel adhered to the $NO_x$ catalyst 10 prior to implementation of the present routine (hereinafter referred to as a fuel adhesion amount) is calculated based on a formula (9). It is to be noted herein that RDn-1 represents an amount of fuel adhered to the $NO_x$ catalyst 10 prior to implementation of the foregoing routine. Then in step S416, a drop Dn in HC adsorption amount is read from a map shown in Fig. 16, based on the fuel adhesion amount RDn. As can be seen from Fig. 16, the HC adsorption amount Dn increases in proportion to an increase in fuel adhesion amount RDn. Then in step S418, a maximum HC adsorption amount is calculated according to a formula (10). The following steps of this routine are the same as those of the first embodiment, and therefore will not be described.

$$RDn = RDn\text{-}1 + Qn \; Rdn \qquad (9)$$

$$Wmaxn = Wmaxn - D \; n \qquad (10)$$

According to the second embodiment that has been described hitherto, the following effect can be achieved in addition to the effect of the first embodiment. That is, it is possible to maintain a high emission reduction rate regardless of a degree of deterioration of the catalyst.

According to the present invention that has been described hitherto, the amount of the reducer to be supplied to the $NO_x$ catalyst is controlled in accordance with reducer adsorbing performance of the $NO_x$ catalyst. Therefore, a high emission reduction rate is maintained in the $NO_x$ catalyst regardless of changes in reducer adsorbing performance of the catalyst.

While the present invention has been described with reference to what are presently considered to be preferred embodiments thereof, it is to be understood that the present invention is not limited to the disclosed embodiments or constructions. On the contrary, the present invention is intended to cover various modifications and equivalent arrangements. In addition, while the various elements of the disclosed invention are shown in various combinations and configurations, which are exemplary, other combinations and configurations, including more, less or only a single embodiment, are also within the scope of the present invention.

An NOx emission control device which maintains a high NOx emission reduction rate regardless of changes in reducer adsorbing performance includes an reducer adsorbing NOx catalyst for reducing a concentration of NOx under an oxygen-rich condition by means of the reducer. The amount of the reducer to be supplied to the NOx catalyst is calculated based on a parameter relating to the NOx catalyst so that the amount of the reducer to be supplied to the NOx catalyst is reduced when the reducer adsorbing performance of the NOx catalyst is low and the amount of the reducer to be supplied to the NOx catalyst is increased when the reducer adsorbing performance of the NOx catalyst is high.

**Claims**

1. An NOx emission control device for reducing a concentration of NOx in exhaust gas discharged from an internal combustion engine (1), wherein

   the NOx emission control device comprises an NOx catalyst (10) that is able to adsorb a reducer and which reduces a concentration of NOx under an oxygen-rich condition by means of the adsorbed reducer and a controller (40) for controlling an amount of the reducer to be supplied to the NOx catalyst (10) based on a parameter relating to the NOx catalyst (10),

   the controller (40) reduces an amount of the reducer to be supplied, when the NOx catalyst (10) reducer adsorbing performance is low, and

   the controller (40) increases an amount of the reducer to be supplied, when the NOx catalyst (10) reducer adsorbing performance is high,

   wherein said controller (40) determines a maximum amount of the reducer which is able to be adsorbed on the NOx catalyst (10) and an amount of the reducer which currently remains on the NOx catalyst (10), and controls the amount of the reducer to be supplied to the NOx catalyst (10) based on a difference between the maximum amount of the reducer which is able to be adsorbed on the NOx catalyst (10) and the amount of the reducer which remains on the NOx catalyst (10).

2. The device according to claim 1, **characterised in that** the NOx catalyst (10) is disposed in an exhaust passage through which exhaust gas from the internal combustion engine (1) is discharged to the atmosphere, and

   that the parameter is at least one of an amount of NOx included in the exhaust gas, a flow rate of the exhaust gas, and a temperature of the exhaust gas.

3. The device according to claim 1, **characterised in that** the reduced adsorbing performance of the NOx catalyst (10) changes in accordance with at least one of a temperature of the NOx catalyst, a pressure of exhaust gas and a degree of deterioration of the NOx catalyst.

4. An NOx emission control device for reducing a concentration of NOx in exhaust gas discharged from an internal combustion engine (1) comprising the steps of:

supplying a reducer to a reducer adsorbing catalyst; and
controlling an amount of the reducer to be supplied to the catalyst (10), based on a parameter relating to the catalyst (10),

wherein an amount of the reducer to be supplied is reduced when the reducer adsorbing performance of the catalyst (10) is low, and
wherein an amount of the reducer to be supplied is increased when the reducer adsorbing performance of the catalyst (10) is high,
wherein said controller (40) determines a maximum amount of the reducer which is able to be adsorbed on the NOx catalyst (10) and an amount of the reducer which currently remains on the NOx catalyst (10), and controls the amount of the reducer to be supplied to the NOx catalyst (10) based on a difference between the maximum amount of the reducer which is able to be adsorbed on the NOx catalyst (10) and the amount of the reducer which remains on the NOx catalyst (10).

5. The method according to claim 4, **characterised in that** the method further comprises the step of arranging the catalyst (10) in an exhaust passage (5) through which exhaust gas from the internal combustion engine is discharged to the atmosphere, and

that the parameter is at least one of an amount of NOx included in the exhaust gas, a flow rate of the exhaust gas, and a temperature of the exhaust gas.

6. The method according to claim 4, **characterised in that** the reducer adsorbing performance of the catalyst (10) changes in accordance with at least one of a temperature of the catalyst (10), a pressure of exhaust gas and a degree of deterioration of the catalyst (10).

**Patentansprüche**

1. Vorrichtung zur $NO_x$-Emissionssteuerung zur Verminderung einer $NO_x$-Konzentration im Abgas einer internen Verbrennungskraftmaschine (1), wobei die Vorrichtung zur $NO_x$-Emissionssteuerung einen

$NO_x$-Katalysator (10), der in der Lage ist, ein Reduktionsmittel zu adsorbieren und der eine $NO_x$-Konzentration unter einer sauerstoffreichen Bedingung mittels des adsorbierten Reduktionsmittels vermindert, und eine Steuerung (40) zur Steuerung einer dem $NO_x$-Katalysator (10) auf der Basis eines dem $NO_x$-Katalysator (10) zugeordneten Parameters zugeführten Reduktionsmittelmenge umfasst, die Steuerung (40) die zugeführte Reduktionsmittelmenge vermindert, wenn die Reduktionsmitteladsorptionsfähigkeit des $NO_x$-Katalysators (10) niedrig ist, und die Steuerung die zugeführte Reduktionsmittelmenge erhöht, wenn die Reduktionsmitteladsorptionsfähigkeit des $NO_x$-Katalysators (10) hoch ist,
wobei die Steuerung (40) eine maximale Reduktionsmittelmenge, die auf dem $NO_x$-Katalysator (10) adsorbiert werden kann, und eine laufend auf dem $NO_x$-Katalysator (10) verbleibende Reduktionsmittelmenge bestimmt, und
die dem $NO_x$-Katalysator (10) zugeführte Reduktionsmittelmenge auf der Grundlage der Differenz zwischen der maximalen Reduktionsmittelmenge, die auf dem $NO_x$-Katalysator (10) adsorbiert werden kann und der auf dem $NO_x$-Katalysator (10) verbleibenden Reduktionsmittelmenge steuert.

2. Vorrichtung nach Anspruch 1,
**dadurch gekennzeichnet, dass**
der $NO_x$-Katalysator (10) in einem Abgaskanal, durch den Abgas von der internen Verbrennungskraftmaschine zur Atmosphäre ausgegeben wird, angeordnet ist, und dass der Parameter mindestens ein Wert von einer im Abgas enthaltenen $NO_x$-Menge, einer Abgasdurchflussmenge und einer Abgastemperatur ist.

3. Vorrichtung nach Anspruch 1,
**dadurch gekennzeichnet, dass**
sich die verminderte Adsorptionsfähigkeit des $NO_x$-Katalysators (10) entsprechend mit mindestens einem Wert einer $NO_x$-Katalysatortemperatur, eines Abgasdrucks und einem Verschlechterungsgrad des $NO_x$-Katalysators (10) verändert.

4. Vorrichtung zur $NO_x$-Emissionssteuerung zur Verminderung einer $NO_x$-Konzentration im Abgas einer internen Verbrennungskraftmaschine (1), umfassend die Schritte:

Zuführen eines Reduktionsmittels zu einem Reduktionsmittel adsorbierenden Katalysator;
Steuerung einer dem Katalysator (10) auf der Grundlage eines dem Katalysator (10) zugeordneten Parameters zugeführten Reduktionsmittelmenge,

wobei die zugeführte Reduktionsmittelmenge vermindert wird, wenn die Reduktionsmitteladsorptionsfähigkeit des Katalysators (10) niedrig ist, und die zugeführte Reduktionsmittelmenge erhöht wird, wenn die Reduktionsmitteladsorptionsfähigkeit des Katalysators (10) hoch ist,

wobei die Steuerung (40) eine maximale Reduktionsmittelmenge, die auf dem $NO_x$-Katalysator (10) adsorbiert werden kann, und eine laufend auf dem $NO_x$-Katalysator verbleibende Reduktionsmittelmenge bestimmt, und die dem $NO_x$-Katalysator (10) zugeführte Reduktionsmittelmenge auf der Grundlage der Differenz zwischen der maximalen Reduktionsmittelmenge, die auf dem Katalysator (10) adsorbiert werden kann, und der Reduktionsmittelmenge, die auf dem Katalysator (10) verbleibt, steuert.

**5.** Verfahren nach Anspruch 4,
**dadurch gekennzeichnet, dass**
das Verfahren weiter den Schritt der Anordnung eines Katalysators (10) in einem Abgaskanal (5), durch den das Abgas von der internen Verbrennungskraftmaschine zur Atmosphäre ausgegeben wird, umfasst,
und dass der Parameter mindestens einen Wert einer im Abgas vorhandenen $NO_x$-Menge, einer Abgasdurchflussmenge und einer Abgastemperatur ist.

**6.** Verfahren nach Anspruch 4,
**dadurch gekennzeichnet, dass**
die Reduktionsmitteladsorptionsfähigkeit des Katalysators (10) sich entsprechend mit mindestens einem Wert der Temperatur des Katalysators (10), einem Druck des Abgases und einem Verschlechterungsgrad des Katalysators (10) ändert.

**Revendications**

**1.** Dispositif de commande des émissions du NOx destiné à réduire une concentration en NOx dans les gaz d'échappement évacués à partir d'un moteur à combustion interne (1), dans lequel le dispositif de commande des émissions de NOx comprend un catalyseur de NOx (10) qui est capable d'adsorber un réducteur et qui réduit une concentration en NOx dans une condition riche en oxygène au moyen du réducteur adsorbé, et un dispositif de commande (40) destiné à commander une quantité de réducteur qui doit être délivrée au catalyseur de NOx (10) sur la base d'un paramètre lié au catalyseur de NOx (10),
le dispositif de commande (40) réduit une quantité du réducteur qui doit être délivré lorsque la performance d'adsorption du réducteur de catalyseur de NOx (10) est faible,
le dispositif de commande (40) augmente une quantité du réducteur qui doit être délivré lorsque la performance d'adsorption du réducteur de catalyseur de NOx (10) est élevée,
dans lequel ledit dispositif de commande (40) détermine une quantité maximale de réducteur qui est capable d'être adsorbée sur le catalyseur de NOx (10) et une quantité du réducteur qui demeure actuellement sur le catalyseur de NOx (10), et commande la quantité du réducteur qui doit être délivrée au catalyseur de NOx (10) sur la base d'une différence entre la quantité maximale du réducteur qui est capable d'être adsorbée sur le catalyseur de NOx (10) et la quantité du réducteur qui demeure sur le catalyseur de NOx (10).

**2.** Dispositif selon la revendication 1, **caractérisé en ce que** le catalyseur de NOx (10) est disposé dans un passage d'échappement, par lequel les gaz d'échappement provenant du moteur à combustion interne (1) sont évacués vers l'atmosphère, et **en ce que** le paramètre est au moins l'un parmi une quantité du NOx présent dans les gaz d'échappement, un débit des gaz d'échappement et une température des gaz d'échappement.

**3.** Dispositif selon la revendication 1, **caractérisé en ce que** la performance d'adsorption réduite du catalyseur de NOx (10) varie selon au moins l'un parmi une température du catalyseur de NOx, une pression des gaz d'échappement et un degré de détérioration du catalyseur de NOx.

**4.** Dispositif de commande des émissions du NOx destiné à réduire une concentration en NOx dans les gaz d'échappement évacués à partir du moteur à combustion interne (1), comprenant les étapes consistant à :

délivrer un réducteur à un catalyseur adsorbant le réducteur ; et

commander une quantité du réducteur qui doit être délivré au catalyseur (10), sur la base d'un paramètre lié au catalyseur (10),

dans lequel une quantité du réducteur qui doit être délivré est réduite lorsque la performance d'adsorption du réducteur de catalyseur (10) est faible, et
dans lequel une quantité du réducteur qui doit être délivré est augmentée lorsque la performance d'adsorption du réducteur de catalyseur (10) est élevée,
dans lequel ledit dispositif de commande (40) détermine une quantité maximale du réducteur qui peut être adsorbée sur le catalyseur de NOx (10) et une quantité du réducteur qui demeure actuellement sur le catalyseur de NOx (10), et commande la quantité du réducteur qui doit être délivré au catalyseur de NOx (10) sur la base d'une différence entre la quantité maximale du réducteur qui peut être adsorbée sur le catalyseur de NOx (10) et la quantité du réducteur qui demeure sur le catalyseur de NOx (10).

5.  Procédé selon la revendication 4, **caractérisé en ce que** le procédé comprend, en outre, l'étape consistant à agencer le catalyseur (10) dans un passage d'échappement (5) à travers lequel les gaz d'échappement provenant du moteur à combustion interne sont évacués vers l'atmosphère, et
    **en ce que** le paramètre est au moins l'un parmi une quantité de NOx présent dans les gaz d'échappement, un débit des gaz d'échappement et une température des gaz d'échappement.

6.  Procédé selon la revendication 4, **caractérisé en ce que** la performance d'adsorption du réducteur du catalyseur (10) varie selon au moins l'un parmi une température du catalyseur (10), une pression des gaz d'échappement et un degré de détérioration du catalyseur (10).

# FIG. 1

# F I G. 2

```
        ( MAIN INJECTION CONTROL )
                      │
                      │←─────────────┐
S100 ──┐      ┌───────────────┐      │
       │      │    READ CA    │      │
              └───────────────┘      │
                      │              │
S102 ──┐      ╱───────────────╲  NO  │
       │     ⟨   CA = CAm ?    ⟩─────┘
             ╲───────────────╱
                      │ YES
S104 ──┐    ┌──────────────────────────┐
       │    │ OPEN FUEL INJECTION VALVE │
            └──────────────────────────┘
                      │
                ( E N D )
```

# F I G. 3

```
     ( SECONDARY INJECTION
            CONTROL )
                │
                │←─────────────┐
S200 ──┐  ┌───────────────┐    │
       │  │    READ CA    │    │
          └───────────────┘    │
                │              │
S202 ──┐  ╱───────────────╲ NO │
       │ ⟨   CA = CAs ?    ⟩───┘
         ╲───────────────╱
                │ YES
S204 ──┐ ┌──────────────────────────┐
       │ │ OPEN FUEL INJECTION VALVE │
         └──────────────────────────┘
                │
           ( E N D )
```

13

# F I G. 4

```
        ┌─────────────────────────┐
        │  SECONDARY INJECTION    │
        │  AMOUNT CONTROL         │
        └─────────────────────────┘
                    │
        ┌─────────────────────────┐
        │      READ T in          │ ─── S300
        └─────────────────────────┘
                    │
        ┌─────────────────────────┐
        │      READ T out         │ ─── S302
        └─────────────────────────┘
                    │
        ┌─────────────────────────┐
        │   CALCULATE T catn      │ ─── S303
        └─────────────────────────┘
                    │
        ┌─────────────────────────┐
        │      READ GA n          │ ─── S304
        └─────────────────────────┘
                    │
        ┌─────────────────────────┐
        │      READ Pn            │ ─── S305
        └─────────────────────────┘
                    │
        ┌─────────────────────────┐
        │   READ HC basen         │ ─── S306
        └─────────────────────────┘
                    │
        ┌─────────────────────────┐
        │      READ W maxn        │ ─── S308
        └─────────────────────────┘
                    │
   NO   ╱─────────────────────────╲
 ───────   Wn−1 < Wmaxn ?           ─── S320
        ╲─────────────────────────╱
  ②                │ YES
        ┌─────────────────────────┐
        │      READ R n           │ ─── S322
        └─────────────────────────┘
                    │
        ┌─────────────────────────┐
        │      READ K1            │ ─── S324
        └─────────────────────────┘
                    │
        ┌─────────────────────────┐
        │      READ K2            │ ─── S326
        └─────────────────────────┘
                    │
        ┌─────────────────────────┐
        │      READ K3            │ ─── S328
        └─────────────────────────┘
                    │
        ┌─────────────────────────┐
        │     CORRECT R n         │ ─── S330
        └─────────────────────────┘
                    │
                   ①
```

14

# FIG. 5

S340    (2)        (1)    S332

| CALCULATE HC dn | | CALCULATE HC an |

S342

| CALCULATE HC n | | CALCULATE HC n | S334

S344    S336

NO    $HCn < 0?$      $HCn < HCmaxn?$    NO    S350

YES       YES

$HCn \leftarrow 0$   S346      $HCn \leftarrow HCmaxn$

S348

$Wn \leftarrow Wmaxn$    $Wn \leftarrow Wn-1 + HCn \times Rn$   S338

( END )

# FIG. 6

LARGE · SMALL

INTAKE AIR AMOUNT

LARGE

SMALL ← → LARGE
CATALYST TEMPERATURE

# FIG. 7

LARGE · LARGE

EXHAUST PRESSURE

SMALL

SMALL ← → LARGE
CATALYST TEMPERATURE

# F I G. 8

# F I G. 9

# F I G. 10

# F I G. 11

# F I G. 12

```
     ┌─────────────────────────┐
     │  SECONDARY INJECTION     │
     │  AMOUNT CONTROL          │
     └─────────────────────────┘
                  │
          ┌──────────────┐
          │   READ T in  │─── S400
          └──────────────┘
                  │
          ┌──────────────┐
          │  READ T out  │─── S402
          └──────────────┘
                  │
        ┌──────────────────┐
        │ CALCULATE T catn │─── S403
        └──────────────────┘
                  │
          ┌──────────────┐
          │  READ GA n   │─── S404
          └──────────────┘
                  │
          ┌──────────────┐
          │   READ P n   │─── S405
          └──────────────┘
                  │
        ┌──────────────────┐
        │  READ HC basen   │─── S406
        └──────────────────┘
                  │
          ┌──────────────┐
          │  READ W maxn │─── S408
          └──────────────┘
                  │
        ┌──────────────────┐
        │ CALCULATE Q n    │─── S410
        └──────────────────┘
                  │
          ┌──────────────┐
          │  READ R dn   │─── S412
          └──────────────┘
                  │
        ┌──────────────────┐
        │ CALCULATE RD n   │─── S414
        └──────────────────┘
                  │
          ┌──────────────┐
          │   READ D n   │─── S416
          └──────────────┘
                  │
        ┌──────────────────┐
        │ CORRECT W maxn   │─── S418
        └──────────────────┘
                  │
                 (3)
```

# FIG. 13

③　S420

NO　Wn-1 < Wmaxn ?

⑤

YES

| READ R n | S422 |

| READ K1 | S424 |

| READ K2 | S426 |

| READ K3 | S428 |

| CORRECT R n | S430 |

④

# F·I G. 14

# FIG. 15

# FIG. 16